# EUROPEAN PATENT APPLICATION

(11) **EP 2 892 112 A1**
(43) Date of publication of application: **08.07.2015**
(21) Application number: 15150290.3
(22) Date of filing: 07.01.2015
(51) Int. Cl.: H01R 13/24, H01R 12/73

(54) **Connector and electronic device having the same**

(30) Priority: 07.01.2014 US 201461924411 P; 13.06.2014 KR 20140072147
(71) Applicant: Samsung Electronics Co., Ltd, Gyeonggi-do 443-742 (KR)
(72) Inventor: Hur, Jun, Gyeonggi-do (KR); Choi, Seung-Ki, Gyeonggi-do (KR)
(74) Representative: Birchenough, Lewis

(57) **Abstract**

A connector is provided. The connector includes a terminal body, at least one first connection terminal disposed at a first surface of the terminal body, and at least one second connection terminal disposed at a second surface of the terminal body. The at least one first connection terminal and the at least one second connection terminal are electrically connected, and the at least one first connection terminal moves independently of the at least one second connection terminal.

## Description

### TECHNICAL FIELD

Certain embodiments of the present invention provide a connector mounted in an electronic device, and an electronic device having the same.

### BACKGROUND

A mobile device is an electronic communication device that enables a user to perform a communication function such as audio communication, message transmission, storage of various information, game playing, and a multimedia service such as moving picture viewing while the user carries the mobile device. The mobile device may include, for example, a smart phone, a tablet Personal Computer (PC), a palm PC, a portable game player, a moving picture/music file reproduction device, a cellular phone, and a notebook computer.

A mobile device typically has terminals for connecting to various external devices (e.g., accessory device). For example, a card slot for connecting to a Subscriber Identification Module (SIM) card or a memory card, an interface connector for charge or connection to a computer, an earphone jack, and a battery connection terminal are mounted in the mobile device.

Further, the development of mobile devices has seen an increase in the number of various kinds of accessory covers, for example including a cover that mounts a Near Field Communication (NFC) antenna, a cover that mounts a wireless charge antenna, and a clear cover. Accordingly, the number of contact clips required for contact with an accessory cover mounted on a main Printed Circuit Board (PCB) has rapidly increased.

As a general trend in the decrease in size and thickness of mobile devices continues, component mounting space has become increasingly limited. In particular, due to an increase of the number of contact clips for contact with an accessory cover, less space is available for other components.

The above information is presented as background information only to assist with an understanding of the present disclosure. No determination has been made, and no assertion is made, as to whether any of the above might be applicable as prior art with regard to the present disclosure.

### SUMMARY

It is an aim of certain embodiments of the present invention to address, solve, mitigate or obviate, at least partly, at least one of the problems and/or disadvantages associated with the related art, for example at least one of the above-mentioned problems and/or disadvantages. Certain embodiments of the present invention aim to provide at least one advantage over the related art, for example at least one of the advantages described below.

Accordingly, certain embodiments of the present invention provide a multi-direction connection connector and an electronic device having the same that enable reduction of a material cost and securement of a mounting space.

In accordance with an aspect of the present invention, there is provided a connector comprising: a terminal body; at least one first connection terminal disposed at a first surface of the terminal body; and at least one second connection terminal disposed at a second surface of the terminal body, wherein the at least one first connection terminal and the at least one second connection terminal are electrically connected, and wherein the at least one first connection terminal moves independently of the at least one second connection terminal.

In accordance with another aspect of the present invention, there is provided an electronic device comprising: a main body; a rear cover (e.g. a rear surface cover) detachably provided in the main body; a battery detachably provided in the main body; and a connection connector comprising a terminal body, a plurality of first connection terminals disposed in a first direction to connect to the battery at a first surface of the terminal body, and a plurality of second connection terminals disposed in a second direction to connect to the rear cover at a second surface of the terminal body and that move independently from the plurality of first connection terminals.

In accordance with another aspect of the present invention, there is provided a connector comprising: a terminal body; at least one first connection terminal disposed at a first surface of the terminal body; at least one second connection terminal disposed at a second surface of the terminal body; and at least one third connection terminal disposed at a third surface of the terminal body, wherein the at least one first connection terminal, the at least one second connection terminal, and the at least one third connection terminal are electrically connected respectively, and wherein the respective at least one first connection terminal, at least one second connection terminal, and at least one third connection terminal independently move.

In accordance with another aspect of the present invention, there is provided a connector comprising: a terminal body; at least one first connection piece having a unidirectional connection terminal disposed at the terminal body; and at least one second connection piece having a dual direction connection terminal disposed at the terminal body.

Other aspects, advantages, and salient features of the present invention will become apparent to those skilled in the art from the following detailed description, which, taken in conjunction with the annexed drawings, discloses various exemplary embodiments of the present invention.

### BRIEF DESCRIPTION OF THE DRAWINGS

The above and other aspects, and features and advantages of certain exemplary embodiments of the present invention will be more apparent from the following description taken in conjunction with the accompanying drawings, in which:
FIG. 1 is a diagram illustrating a network environment including an electronic device according to various exemplary embodiments of the present invention;
FIG. 2 is a perspective view illustrating a unidirectional connection connector according to another exemplary embodiment of the present invention;
FIGS. 3, 4, and 5 are perspective views illustrating each connector according to various exemplary embodiments of the present invention;
FIGS. 6 and 7 are perspective views illustrating each connection terminal provided in a connector according to various exemplary embodiments of the present invention;
FIG. 8 is a top plan view illustrating a state in which a connector is mounted in a mobile device rear case according to various exemplary embodiments of the present invention;
FIG. 9 is a cross-sectional view illustrating a rear case in which a connector is mounted according to various exemplary embodiments of the present invention;
FIG. 10 is a cross-sectional view illustrating a state in which a battery is connected to a first connection terminal of a connector and in which a rear surface cover is connected to a second connection terminal according to various exemplary embodiments of the present invention;
FIG. 11 is a perspective view illustrating a connector having a flat connecting surface according to various exemplary embodiments of the present invention;
FIG. 12 is a cross-sectional view illustrating a state in which a battery is connected to a first connection terminal of a connector and in which a rear surface cover is connected to a second connection terminal according to various exemplary embodiments of the present invention;
FIG. 13 is a cross-sectional view illustrating a state in which a battery is connected to a first connection terminal of a connector and in which a rear surface cover is connected to a second connection terminal according to various exemplary embodiments of the present invention;
FIG. 14 is a cross-sectional view illustrating a rear case in which a triple direction connector is mounted according to various exemplary embodiments of the present invention;
FIG. 15 is a perspective view illustrating a triple direction connection terminal mounted in a connector according to various exemplary embodiments of the present invention;
FIG. 16 is a perspective view illustrating a connector according to various exemplary embodiments of the present invention;
FIG. 17 is a perspective view illustrating a connection terminal provided in a connector according to various exemplary embodiments of the present invention; and
FIG. 18 is a block diagram illustrating a configuration of a mobile device according to various exemplary embodiments of the present invention.

Throughout the drawings, it should be noted that the same or similar reference numbers may be used to refer to the same or similar elements, features, and structures.

### DETAILED DESCRIPTION

The following description of exemplary embodiments of the present invention, with reference to the accompanying drawings, is provided to assist in a comprehensive understanding of the present invention, as defined by the claims. The description includes various specific details to assist in that understanding but these are to be regarded as merely exemplary. Accordingly, those of ordinary skill in the art will recognize that various changes and modifications of the various embodiments described herein may be made without departing from the scope of the present invention.

In addition, descriptions of well-known functions, processes, operations, features, elements, components, structures and constructions may be omitted for clarity and conciseness, and to avoid obscuring the subject matter of the present invention.

The terms and words used in the following description and claims are not limited to the bibliographical meanings, but, are merely used to enable a clear and consistent understanding of the present invention. Accordingly, it should be apparent to those skilled in the art that the following description of various exemplary embodiments of the present invention is provided for illustration purpose only and not for the purpose of limiting the present invention, as defined by the appended claims.

It is to be understood that, throughout the description and claims of this specification, the singular forms "a," "an," and "the" include plural referents unless the context clearly dictates otherwise. Thus, for example, reference to "a component surface" includes reference to one or more of such surfaces.

Throughout the description and claims of this specification, the words "comprise", "include", "contain" and "have", and variations of the words, for example "comprising" and "comprises", means "including but not limited to", and is not intended to (and does not) exclude other features, elements, components, integers, steps, processes, functions, operations, numerals, characteristics, properties and/or groups thereof.

By the term "substantially" it is meant that the recited characteristic, parameter or value need not be achieved exactly, but that deviations or variations, including for example, tolerances, measurement error, measurement accuracy limitations and other factors known to those of skill in the art, may occur in amounts that do not preclude the effect the characteristic was intended to provide.

In various embodiments of the present disclosure, an expression such as "or" includes any combination and an entire combination of together listed words. For example, "A or B" may include A, B, or A and B.

In various embodiments of the present disclosure, expressions such as "first", "second", "primary", and "secondary" may represent various elements of the present disclosure, but do not limit corresponding elements. For example, the expression does not limit order and/or importance of corresponding elements. The expression may be used for distinguishing one element from another element. For example, both a first user device and a second user device are user devices and may represent different user devices. For example, a first element may be referred to as a second element without deviating from the scope of the present disclosure, and similarly, a second element may be referred to as a first element.

When it is described that an element is "connected" or "electrically connected" to another element, the element may be "directly coupled" to the other element or "electrically connected" to the other element, but there may exist a third element between the element and the other element. However, when it is described that an element is "directly connected" or "directly electrically connected" to another element, there is no intervening element between the element and the other element.

Features, elements, components, integers, steps, processes, operations, functions, characteristics, properties and/or groups thereof described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, process, activity, operation or step and X is some means for carrying out that action, process, activity, operation or step) encompasses means X adapted, configured or arranged specifically, but not exclusively, to do Y.

Further, a term used for describing a specific embodiment of the present invention does not necessarily limit various other embodiments of the present invention. When describing exemplary embodiments of the present invention and in the appended claims, a singular form includes a plurality of forms unless it is explicitly differently represented. Unless differently defined, entire terms including a technical term and a scientific term used here have the same meaning as a meaning that may be generally understood by a person of common skill in the art. It should be understood that generally using terms defined in a dictionary have a meaning corresponding to that of a context of related technology and should not be understood as having an ideal or excessively formal meaning unless explicitly defined.

An electronic device according to various exemplary embodiments of the present invention may be a device including a communication function. For example, the electronic device may include at least one of a smart phone, a tablet Personal Computer (PC), a mobile phone, a video phone, an e-book reader, a desktop PC, a laptop PC, a Netbook computer, a Personal Digital Assistant (PDA), a Portable Multimedia Player (PMP), an Moving Picture Experts Group (MPEG)-1 Audio Layer 3 (MP3) player, a mobile medical equipment, a camera, or a wearable device (e.g., Head-Mounted-Device (HMD) such as electronic glasses), electronic clothing, an electronic bracelet, an electronic necklace, electronic accessory, electronic tattoo, or a smart watch.

According to various exemplary embodiments of the present invention, the electronic device may be a smart home appliance having a communication function. The smart home appliance, for example, the electronic device may include at least one of a television (TV), a Digital Video Disk (DVD) player, an audio device, a refrigerator, an air conditioner, a vacuum cleaner, an oven, a microwave oven, a washing machine, an air cleaner, a set-top box, a television box (e.g., Samsung HomeSync™, AppleTV™, or Google TV™), game consoles, an electronic dictionary, an electronic key, a camcorder, or an electronic frame.

According to various exemplary embodiments of the present invention, the electronic device may include at least one of various medical equipment (e.g., a Magnetic Resonance Angiography (MRA) device, a Magnetic Resonance Imaging (MRI) device, a Computed Tomography (CT) device, a scanning device, and a ultrasonic wave device), a navigation device, a Global Positioning System (GPS) receiver, an Event Data Recorder (EDR), a Flight Data Recorder (FDR), a vehicle infotainment device, an electronic equipment for ship (e.g., navigation device for ship and gyro compass), avionics, a security device, a head unit for a vehicle, an industrial or home robot, an Automatic Teller Machine (ATM) of a banking institute, or a Point of Sales (POS) of a store.

According to various exemplary embodiments of the present invention, the electronic device may include at least one of a portion of furniture or a building/construction, an electronic board, an electronic signature receiving device, a projector, or various measuring devices (e.g., water supply, electricity, gas, or electric wave measuring device) including a communication function. An electronic device according to various embodiments of the present disclosure may be at least one combination of the foregoing various devices. Further, an electronic device according to various embodiments of the present disclosure may be a flexible device. An electronic device according to various embodiments of the present disclosure is not limited to the foregoing devices.

Hereinafter, a connector and an electronic device according to various exemplary embodiments of the present invention will be described with reference to the accompanying drawings. A term of a user used in various exemplary embodiments of the present invention may indicate a person using an electronic device or a device (e.g., artificial intelligence electronic device) using the electronic device. Herein, references to embodiments of the present disclosure may be regarded as references to exemplary embodiments of the present invention and vice versa.

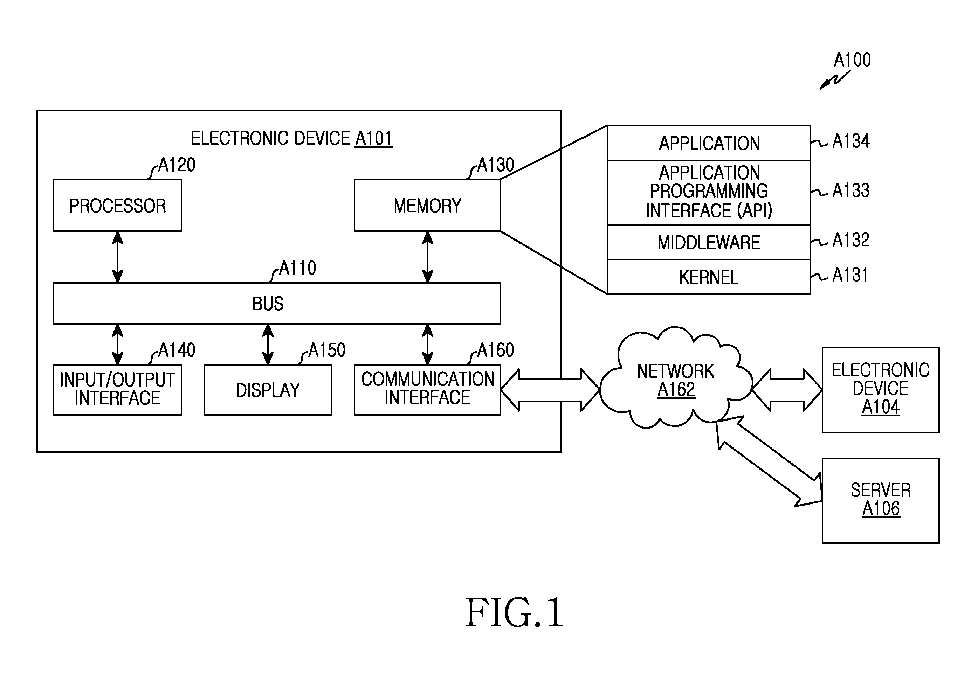

FIG. 1 is a diagram illustrating a network environment including an electronic device according to various embodiments of the present disclosure.

Referring to FIG. 1, a network environment A100 may include an electronic device A101 that in turn may include a bus A110, a processor A120, a memory A130, an input and output interface A140, a display A150, and a communication interface A160, but is not limited thereto.

The bus A110 may be a circuit that connects the foregoing elements and that performs communication (e.g., transmit a control message) between the foregoing elements.

The processor A120 may receive an instruction from the foregoing other elements (e.g., the memory A130, input and output interface A140, display A150, and communication interface A160) through, for example, the bus A110, decode the received instruction, and perform operation and data processing according to the decoded instruction.

The memory A130 may store an instruction and/or data received from the processor A120 or other elements (e.g., the input and output interface A140, display A150, and communication interface A160) or generated by the processor A120 or other elements. The memory A130 may include a programming module such as a kernel A131, middleware A132, an Application Programming Interface (API) A133, or an application A134. The foregoing respective programming modules may be formed with software, firmware, hardware, or a combination of at least two thereof.

The kernel A131 may control or manage a system resource (e.g., the bus A110, the processor A120, or the memory A130) used for executing an operation or a function implemented in the remaining programming modules, for example, the middleware A132, API A133, or application A134. Further, the kernel A131 may provide an interface that may access to an individual element of the electronic device A101 in the middleware A132, the API A133, or the application A134 to control or manage the individual element.

The middleware A132 may perform an intermediary function of enabling the API A133 or the application A134 to communicate with the kernel A131 to give and receive data. Further, the middleware A132 may control (e.g., schedule or load balance) a work request received from the application A134 using, for example, a method of aligning a priority that may use a system resource (e.g., the bus A110, processor A120, or memory A130) of the electronic device A101 to at least one of the applications A134.

The API A133 is an interface that enables the application A134 to control a function in which the kernel A131 or the middleware A132 provides and may include, for example, at least one interface or function (e.g., an instruction) for file control, window control, image processing, or text control.

According to various embodiments of the present disclosure, the application A134 may include a Short Message Service (SMS)/Multimedia Message Service (MMS) application, an e-mail application, a calendar application, an alarm application, a health care application (e.g., an application that measures an exercise amount or blood sugar), or an environment information application (e.g., an application that provides atmospheric pressure, humidity, or temperature information). Additionally or alternatively, the application A134 may be an application related to information exchange between the electronic device A101 and an external electronic device (e.g., an electronic device A104). The application related to information exchange may include, for example, a notification relay application that transmits specific information to the external electronic device or a device management application that manages the external electronic device.

For example, the notification relay application may include a function of transmitting notification information that has occurred in other applications (e.g., an SMS/MMS application, an e-mail application, a health care application, or an environment information application) of the electronic device A101 to an external electronic device (e.g., the electronic device A104). Additionally or alternatively, the notification relay application may receive notification information from, for example, an external electronic device (e.g., the electronic device A104) and provide the notification information to a user. The device management application may manage (e.g., install, delete, or update) turn-on/turn-off of a function (e.g., an external electronic device (or a partial component)) of at least a portion of an external electronic device (e.g., the electronic device A104) that communicates with, for example, the electronic device A101 or brightness of a display (or resolution adjustment), an application operating in an external electronic device, or a service (e.g., a communication service or a message service) provided in an external electronic device.

According to various embodiments of the present disclosure, the application A134 may include an application designated according to an attribute (e.g., a kind of an electronic device) of an external electronic device (e.g., the electronic device A104). For example, when the external electronic device is an MP3 player, the application A134 may include an application related to music reproduction. Similarly, when the external electronic device is a mobile medical device, the application A134 may include an application related to health care. According to an embodiment of the present disclosure, the application A134 may include at least one of an application designated to the electronic device A101 or an application received from an external electronic device (e.g., a server A106, the electronic device A104).

The input and output interface A140 may transfer an instruction and/or data input by a user through an input and output device (e.g., a sensor, a keyboard, or a touch screen) to the processor A120, the memory A130, and the communication interface A160 through, for example, the bus A110. For example, the input and output interface A140 may provide data of a user touch input through a touch screen to the processor A120. Further, the input and output interface A140 may output an instruction and/or data received from the processor A120, the memory A130, and the communication interface A160 through, for example, the bus A110, through the input and output device (e.g., a speaker or a display). For example, the input and output interface A140 may output sound data processed through the processor A120 to the user through a speaker.

The display A150 may display various information (e.g., multimedia data or text data) to the user.

The communication interface A160 may connect communication between the electronic device A101 and an external device (e.g., the electronic device A104 or the server A106). For example, the communication interface A160 may be connected to a network A162 through wireless communication or wire communication to communicate with the external device. The wireless communication may include at least one of, for example, Wireless Fidelity (WiFi), Bluetooth (BT), Near Field Communication (NFC), GPS, or cellular communication (e.g., Long-Term Evolution (LTE), LTE-Advanced (LTE-A), Code Division Multiple Access (CDMA), Wideband CDMA (WCDMA), Universal Mobile Telecommunications System (UMTS), Wireless Broadband (WiBro), or Global System for Mobile Communications (GSM)). The wire communication may include at least one of, for example, a Universal Serial Bus (USB), a High Definition Multimedia Interface (HDMI), Recommended Standard 232 (RS-232), or a Plain Old Telephone Service (POTS).

According to various embodiments of the present disclosure, the network A162 may be a telecommunications network. The telecommunication network may include at least one of a computer network, Internet, Internet of things, or a telephone network. According to an embodiment of the present disclosure, a protocol (e.g., a transport layer protocol, a data link layer protocol, or a physical layer protocol) for communication between the electronic device A101 and an external device may be supported in at least one of the application A134, the API A133, the middleware A 132, the kernel A 131, or the communication interface A160.

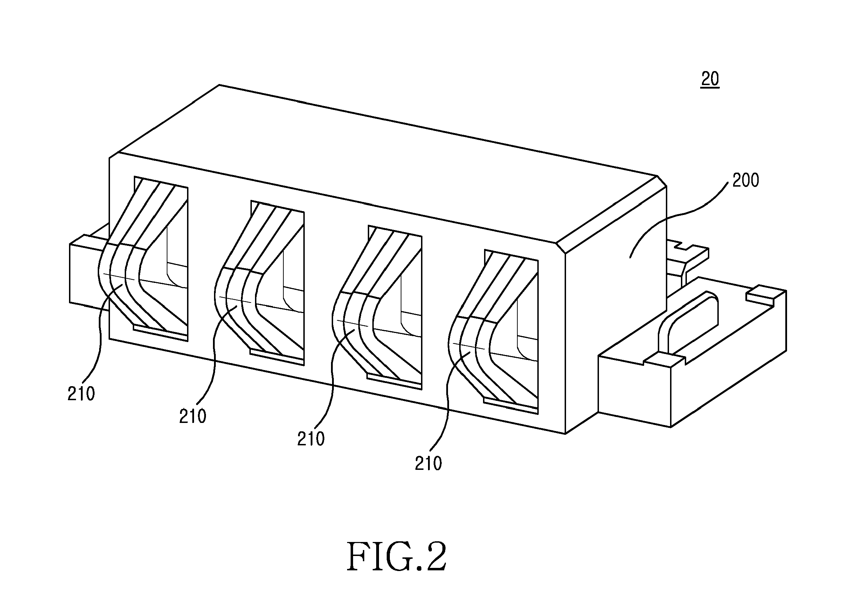

FIG. 2 is a perspective view illustrating a unidirectional connection connector according to another embodiment of the present disclosure.

Referring to FIG. 2, a connector 20 is a unidirectional connector and is a connector in which a plurality of connection pieces 210 are disposed in a structure protruded from a first surface in a terminal body 200.

Each connection piece 210 has elasticity and has a structure connected to a connection terminal provided in a battery (not shown).

Hereinafter, a configuration of a connector according to various embodiments of the present disclosure will be described with reference to the drawings.

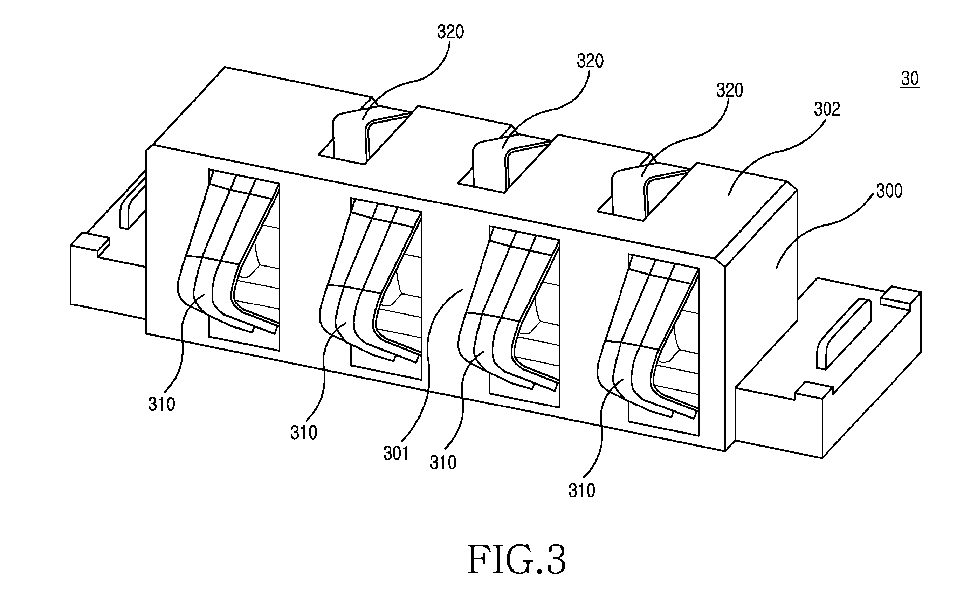

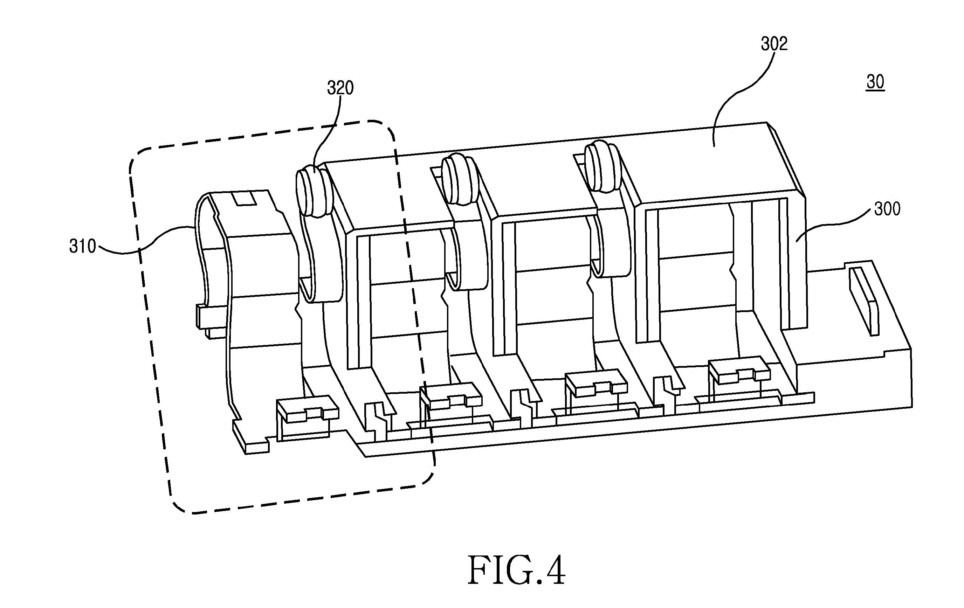

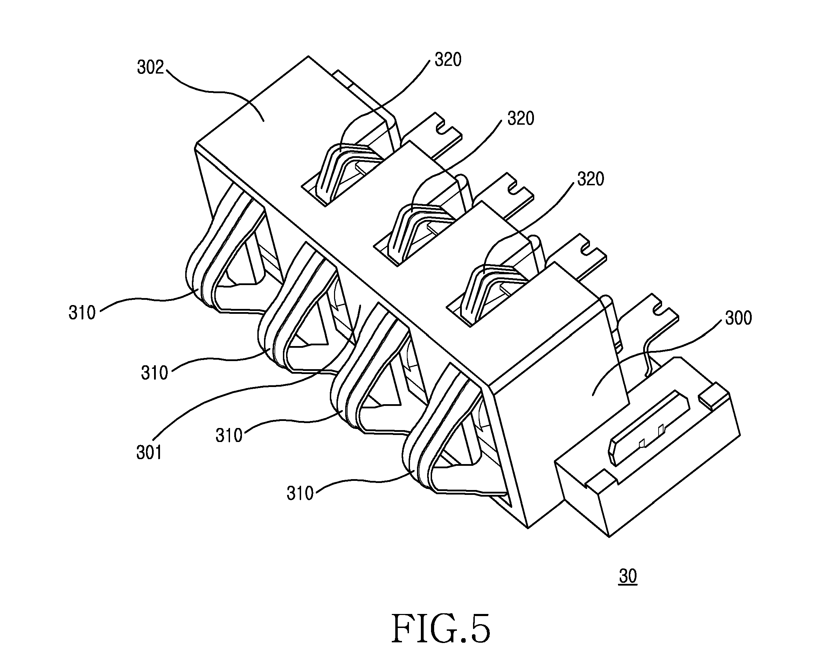

FIGS. 3 to 5 are perspective views illustrating each connector according to various embodiments of the present disclosure.

Referring to FIGS. 3 to 5, a connector 30 according to various embodiments of the present disclosure is a multi-direction connection connector and may be simultaneously implemented with a battery connection and rear surface cover connection connector. The connector 30 may include a terminal body 300 and one or a plurality of first and second connection terminals 310 and 320 provided to protrude in different directions in the terminal body 300.

According to various embodiments of the present disclosure, the terminal body 300 is an injection material and may be implemented with a support that supports the first and second connection terminals 310 and 320. The terminal body 300 may have a first surface 301 and a second surface 302. When the connector 30 is mounted in a mobile device, the first surface 301 may be a surface facing with a battery terminal, and the second surface 302 may be a surface facing with an inner surface of a battery cover or an accessory cover using for detaching a battery.

According to various embodiments of the present disclosure, respective first connection terminals 310 may have a shape protruded from an opening or a slot formed in the first surface 301 of the terminal body. Further, the respective first connection terminals 310 may be disposed to have elasticity with an equal interval at the first surface 301. The respective first connection terminals 310 may elastically move at a respective opening or slot provided at the first surface 301. Further, the respective first connection terminals 310 may be disposed to protrude from the first surface 301 in a state in which an end portion area thereof is bent.

According to various embodiments of the present disclosure, respective second connection terminals 320 may have a shape protruded from an opening or a slot formed at the second surface 302 of the terminal body. Further, the respective second connection terminals 320 may be disposed to have elasticity with an equal interval at the second surface 302. The respective second connection terminals 320 may elastically move at a respective opening provided at the second surface 302. Further, the respective second connection terminals 320 may be disposed to protrude from the second surface 302 in a state in which an end portion area thereof is bent.

According to various embodiments of the present disclosure, the respective first connection terminals 310 and the respective second connection terminals 320 may be alternately disposed in an equal interval. FIGS. 3 to 5 illustrate a configuration in which four first connection terminals 310 and three second connection terminals 320 are disposed. According to a performance of a mobile device, the first connection terminal 310 or the second connection terminal 320 may be further provided.

According to various embodiments of the present disclosure, the respective first connection terminals 310 may be disposed at respective openings formed at the first surface 301, and the respective second connection terminals 320 may be disposed at respective openings formed at the second surface 302. The first connection terminals 310 and the second connection terminals 320 may be spatially and independently disposed at the terminal body 300 and may be disposed not to receive interference to independently move. "The independent" means that the first and second connection terminals are disposed in different directions and do not receive interference when moving.

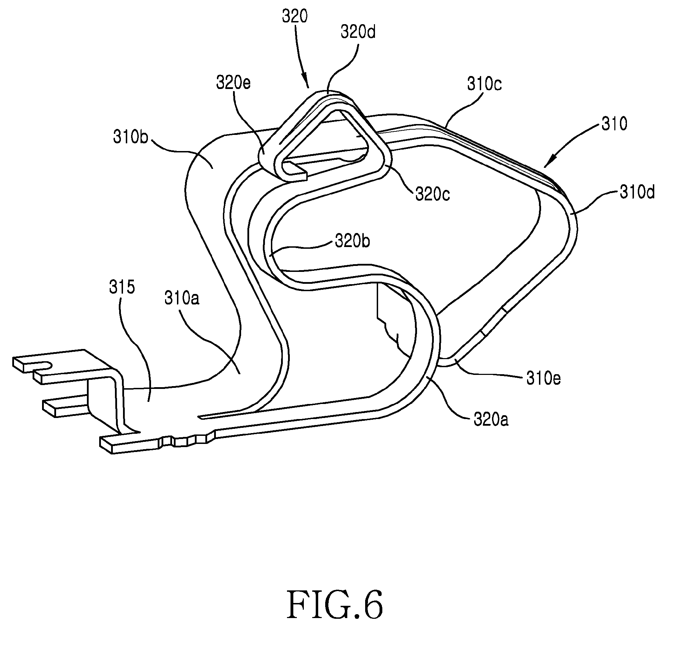

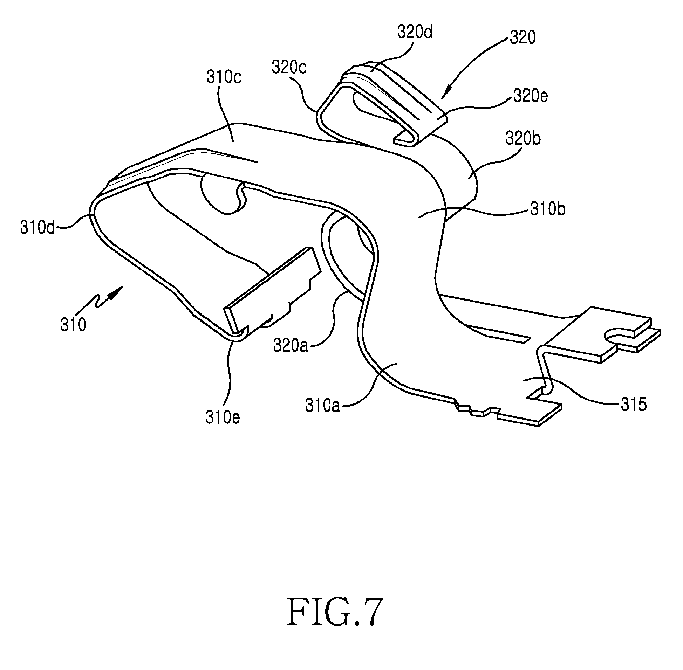

A configuration of the respective first and second connection terminals 310 and 320 according to various embodiments of the present disclosure will be described with reference to FIGS. 6 and 7.

FIGS. 6 and 7 are perspective views illustrating each connection terminal provided in a connector according to various embodiments of the present disclosure.

Referring to FIGS. 6 and 7, only one first connection terminal 310 and one second connection terminal 320 are illustrated. The connector 30 according to various embodiments of the present disclosure includes four first connection terminals 310 and three second connection terminals 320 and may include connection terminals of the number of four first connection terminals and three second connection terminals or more or four first connection terminals and three second connection terminals or less according to a performance of a mobile device. A configuration of the remaining first connection terminals (three) 310 and second connection terminals (two) 320 of the connector 30 may be the same as that of the first and second connection terminals 310 and 320 of FIGS. 6 and 7. In order to fix the first connection terminal 310 and the second connection terminal 320 to the terminal body, the first connection terminal 310 and the second connection terminal 320 may share fixed end 315. The first and second connection terminals 310 and 320 may be electrically, functionally, and mechanically connected by the fixed end 315. The connection terminal provided in the connector 30 according to various embodiments of the present disclosure may include one fixed end 315 and first and second free ends 310 and 320.

According to various embodiments of the present disclosure, the connector 30 may be produced to have one fixed end 315 and seven free ends. The seven free ends may be formed with four first connection terminals 310 and three second connection terminals 320. When the connector 30 includes one fixed end 315 and first and second free end 310 and 320, the first and second free ends may include the first connection terminal 310 and the second connection terminal 320, respectively, by bending of a plurality of times.

According to various embodiments of the present disclosure, the first connection terminal 310 may be produced by bending of at least three times at the fixed end 315. The first connection terminal 310 may be produced by a bending work of one time or two times, but when producing by a bending work of at least three times, a characteristic of an elastic force may further maximize. The first connection terminal 310 is produced by a bending work of at least three times, and may be produced in a first direction in which a first surface of the terminal body 300 is formed. The first connection terminal 310 has a first bending portion 310a formed by primarily bending at the fixed end 315, a second bending portion 310b formed by secondarily bending, and a third bending portion 310c formed by thirdly bending and may be disposed in a first direction advancing toward a first surface of the terminal body 300. Finally, the first connection terminal 310 has a fourth bending portion 310d formed by a bending work. The fourth bending portion 310d may be a portion connecting to a terminal of a battery connector to be described later. A bending portion 310e in an end portion of the first connection terminal 310 may be provided or may not be provided.

According to various embodiments of the present disclosure, the second connection terminal 320 may be produced by bending of at least three times at the fixed end 315. The second connection terminal 320 may be produced by a bending work of one time or two times, but when producing by a bending work of at least three times, an elastic force may increase. The second connection terminal 320 may be produced by a bending work of at least three times and may be produced in a second direction in which a second surface of the terminal body is formed. The second connection terminal 320 has a first bending portion 320a formed by primarily bending at the fixed end 315, a second bending portion 320b formed by secondarily bending, and a third bending portion 320c formed by thirdly bending, and may be disposed in a second direction advancing toward a second surface of the terminal body. Finally, the second connection terminal 320 may have a fourth bending portion 320d formed by a bending work. The fourth bending portion 320d may be a portion connecting to a rear surface cover, for example, a battery cover and an accessory cover to be described later. A bending portion 320e in an end portion of the second connection terminal 320 may be provided or may not be provided.

According to various embodiments of the present disclosure, the first connection terminal 310 and the second connection terminal 320 equally have bending portions of four times and are each disposed in different directions, and advancing directions of the respective first and second connection terminals 310 and 320 may be different according to a disposition of another connection terminal. The first connection terminal 310 may be disposed in a first direction in which a first surface is formed. The second connection terminal 320 may be disposed in a second direction in which a second surface is formed. The first connection terminal 310 and the second connection terminal 320 may each be relatively disposed in a vertical direction. When the first and second connection terminals 310 and 320 are in a connected state, the respective first and second connection terminals 310 and 320 share only fixed end 315, and the free ends thereof (e.g., 310, 320) are independently disposed and operate, and thus mutual moving interference thereof may be prevented and the respective first and second connection terminals 310 and 320 may independently operate.

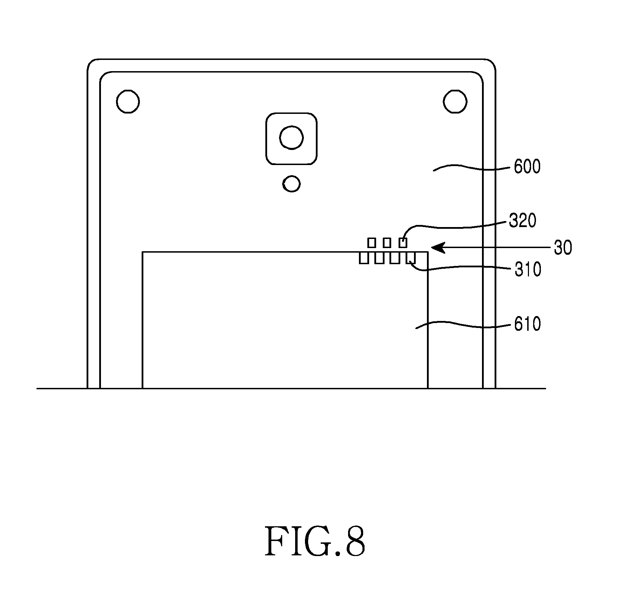

FIG. 8 is a top plan view illustrating a state in which a connector is mounted in a mobile device rear case according to various embodiments of the present disclosure.

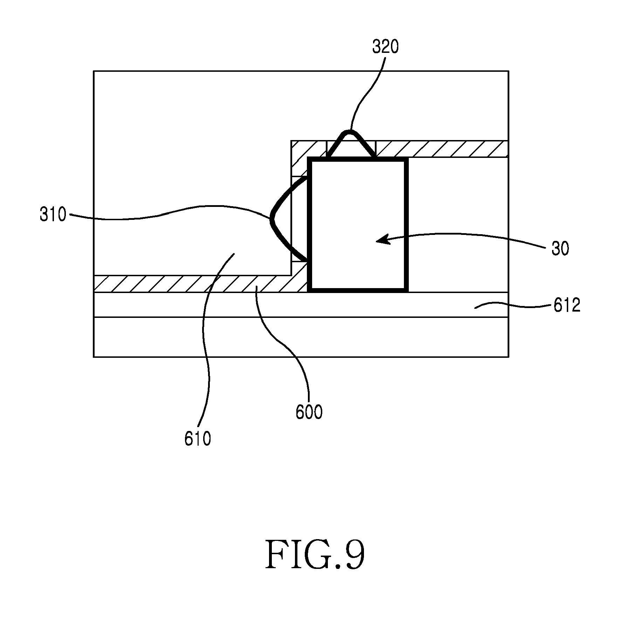

FIG. 9 is a cross-sectional view illustrating a rear case in which a connector is mounted according to various embodiments of the present disclosure.

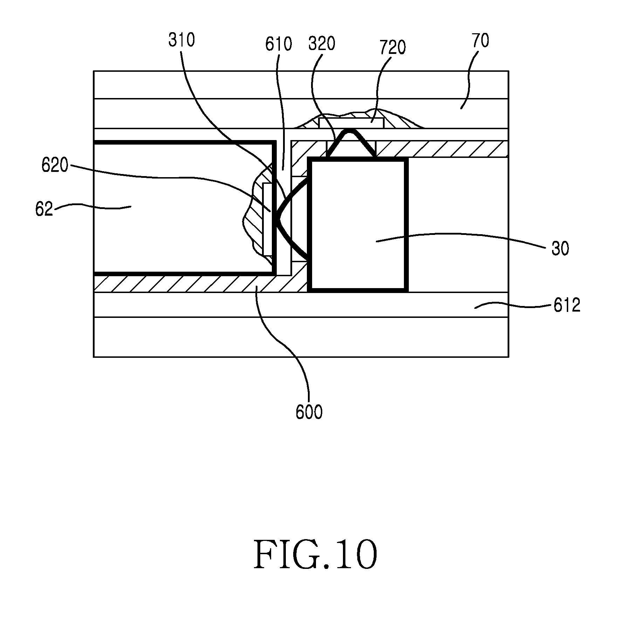

FIG. 10 is a cross-sectional view illustrating a state in which a battery is connected to a first connection terminal of a connector and in which a rear surface cover is connected to a second connection terminal according to various embodiments of the present disclosure.

Referring to FIGS. 8 to 10, when the connector 30 according to various embodiments of the present disclosure is mounted in a mobile device, a plurality of first and second connection terminals 310 and 320 each may be disposed to be exposed in a mobile device rear case 600 (e.g., a case in a rear surface portion of a terminal). The mobile device rear surface has a structure in which a rear cover 70 of FIG. 10 may be detached, and the rear cover 70 of FIG. 10 may be, for example, a battery cover or an accessory cover. In the mobile device, when the rear cover 70 of FIG. 10 is separated, the entire rear case 600 is shown.

According to various embodiments of the present disclosure, the rear case 600 may have a battery slot 610 for housing a battery 62. The battery slot 610 may be recessed in a random thickness (e.g., a thickness of the battery 62) at a first surface of the rear case 600. That is, the battery slot 610 may be provided in a stepped shape from the rear case 600. Additionally, the battery slot 610 may correspond to a mounting location or a shape of a battery. The connector 30 according to various embodiments of the present disclosure may be disposed so that the first connection terminal 310 advances in a direction of a connection portion of a mobile battery and the second connection terminal 320 is exposed in a direction of a rear surface cover.

According to various embodiments of the present disclosure, referring to FIG. 10, when the battery 62 is not housed into the battery slot 610, the first connection terminal 310 and the second connection terminal 320 may be disposed to expose in a state protruded from each of a side wall the battery slot 610 and a first surface of the rear case 600. The exposed first connection terminal 310 and second connection terminal 320 may be disposed to be exposed while maintaining a state elastically supported thereto. Reference numeral 612 indicates a main board.

According to various embodiments of the present disclosure, referring to FIG. 10, when the battery 62 is housed in the battery slot 610, respective connection terminals 620 of the battery 62 may be connected to the respective first connection terminals 310 and may maintain the connected state. The battery connection terminal 620 has a flat terminal shape, but because the first connection terminal 310 is in an elastically supported state, the respective battery connection terminals 620 and the respective first connection terminals 310 may maintain a close contact state.

In the present disclosure, it is unnecessary that a connection terminal provided in the battery 62 is limited to the battery connection terminal 620, and when an NFC antenna or an NFC charge antenna is mounted in the battery 62, the battery connection terminal 620 may include an NFC antenna terminal or an NFC charge antenna terminal. Therefore, when the mobile device has a NFC antenna function, the battery connection terminal 620 may include an NFC antenna terminal, and when a mobile device has a wireless charge antenna function, the battery connection terminal 620 may include a near field wireless charge antenna terminal. The battery connection terminal 620 may include a ground terminal.

According to various embodiments of the present disclosure, when a rear cover 70 is coupled to the rear case 600, the second connection terminal 320 and a connection terminal 720 in the rear cover 70 may be connected and maintain the connected state. As described above, the rear cover 70 may be, for example, a battery cover or an accessory cover. The connection terminal 720 disposed at an inner surface of the rear cover 70 has a flat terminal shape, but because the second connection terminal 320 is in an elastically supported state, the respective connection terminals 720 and the respective second connection terminals 320 may maintain a close contact state.

According to various embodiments of the present disclosure, when an NFC antenna or an NFC charge antenna is mounted in the rear cover 70, the connection terminal 720 disposed at the rear surface cover may include an NFC antenna terminal or an NFC charge antenna terminal. Therefore, when the mobile device has an NFC antenna function, the connection terminal 720 disposed at the rear surface cover may include an NFC antenna terminal, and when the mobile device has a wireless charge antenna function, the connection terminal 720 may include a near field wireless charge antenna terminal. An NFC antenna including the NFC antenna or the near field wireless charge antenna may be provided at a first surface of a main body rear case 600, at the battery 62, or at the rear cover 70. The rear surface cover connection terminal 720 may include a ground terminal or an accessory cover identification pin terminal.

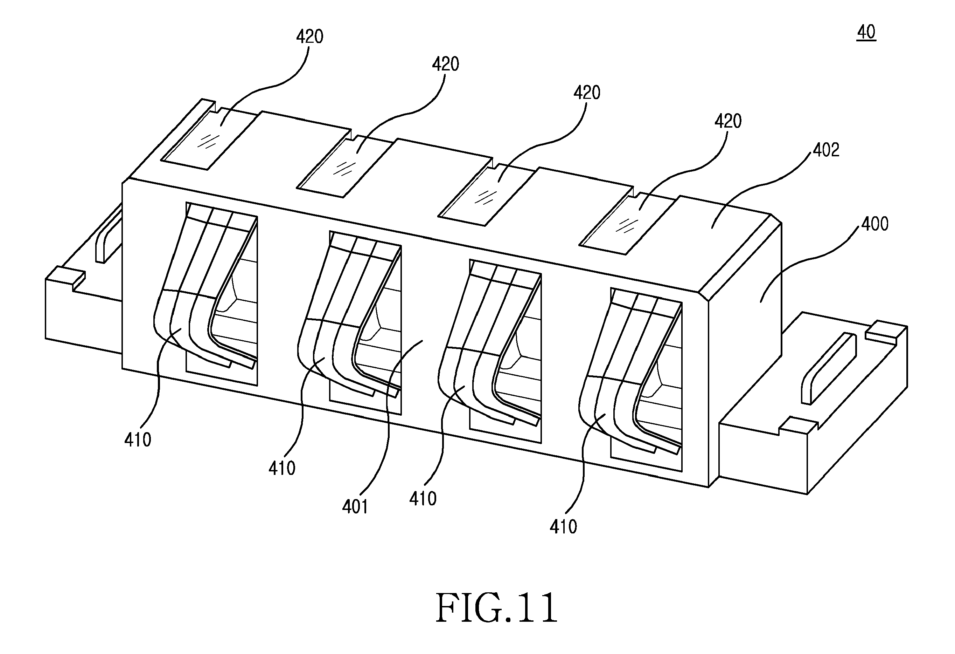

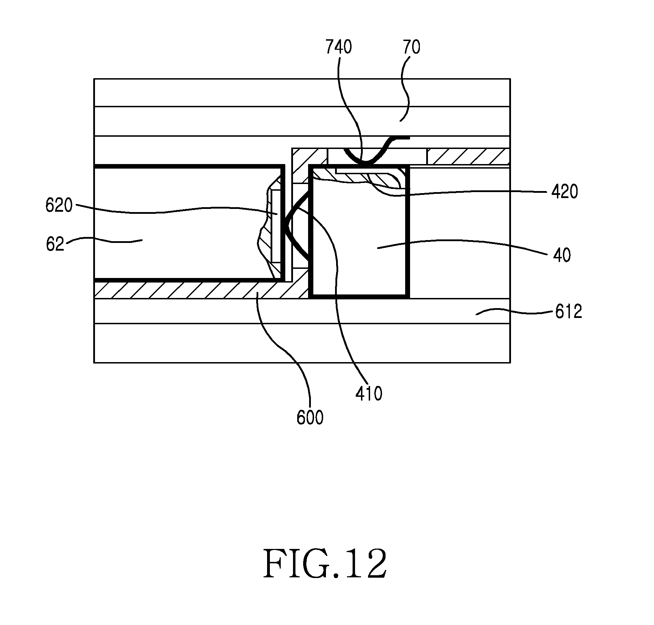

A configuration of a connector according to various embodiments of the present disclosure will be described with reference to FIGS. 11 and 12. When describing the connector, a first connection terminal has the same configuration and a second connection terminal has a different configuration, compared with the connector 30 of FIGS. 3 to 5, and thus a description of a configuration of a first connection terminal may be omitted and only a configuration of the second connection terminal will be described. In the first connection terminal, a connection portion may have a flat shape, similar to a second connection terminal.

FIG. 11 is a perspective view illustrating a connector having a flat connecting surface according to various embodiments of the present disclosure.

FIG. 12 is a cross-sectional view illustrating a state in which a battery is connected to a first connection terminal of a connector and in which a rear surface cover is connected to a second connection terminal according to various embodiments of the present disclosure.

Referring to FIGS. 11 and 12, a multi-direction connection connector 40 according to various embodiments of the present disclosure includes four first connection terminals 410 and four second connection terminals 420 and may include connection terminals of the number of four or more or four or less according to a performance of a mobile device.

According to various embodiments of the present disclosure, the connector 40 may be produced to have one fixed end and eight free ends. The eight free ends may include four first connection terminals 410 and four second connection terminals 420. The connector 40 may alternately include a first connection terminal 410 and a second connection terminal 420 at a first surface 401 and a second surface 402, respectively. A detailed configuration of the first connection terminal 410 has been already described and thus a detailed description thereof will be omitted.

According to various embodiments of the present disclosure, in the second connection terminal 420, an end portion area extended from the fixed end may be produced to be disposed in a fixed state in a flat shape at the second surface 402. That is, an end portion of the respective second connection terminals 420 may be disposed parallel in a flat terminal shape at the second surface 402. The respective second connection terminals 420 may be disposed in the same plane state as that of the second surface 402 of the terminal body.

According to various embodiments of the present disclosure, the first connection terminal 410 has bending portions of four times and is disposed to be exposed at the first surface 401, but the second connection terminal 420 may include or may not include a bending portion and may have a terminal shape flatly disposed in a state fixed to the second surface 402.

According to various embodiments of the present disclosure, when a rear cover 70 is coupled to the main body rear case 600, the second connection terminal 420 and a connection terminal 740 in the rear cover 70 may be connected and maintain the connected state. The rear cover 70 may be, for example, a battery cover or an accessory cover. The connection terminal 740 disposed at an inner surface of the rear cover 70 has a terminal shape (connection clip shape) having elasticity of a protruded shape, but the second connection terminal 420 is in a fixed state of a flat shape, and thus the respective connection terminals 740 and the respective second connection terminals 420 may maintain a close contact state.

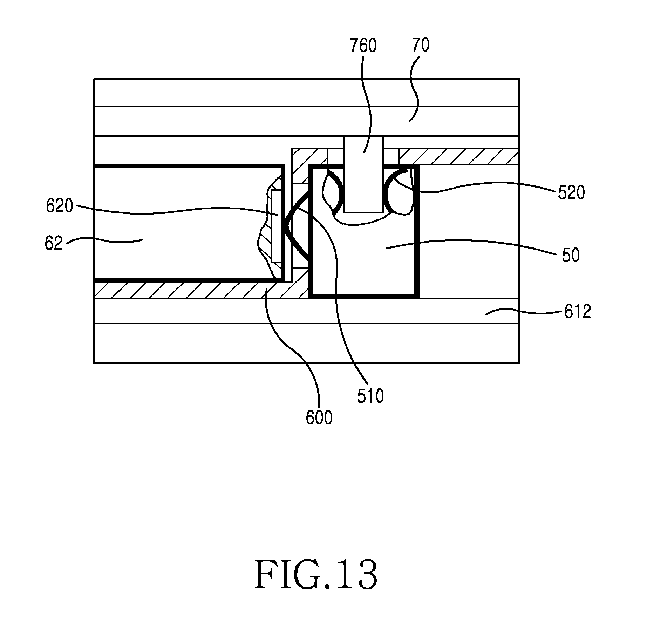

A configuration of a multi-direction connection connector according to various embodiments of the present disclosure will be described with reference to FIG. 13. When describing the multi-direction connection connector, a first connection terminal has the same configuration and a second connection terminal has a different configuration, compared with the multi-direction connection connector 30 of FIGS. 3 to 5, and thus a description of a configuration of the first connection terminal may be omitted and only a configuration of the second connection terminal will be described.

FIG. 13 is a cross-sectional view illustrating a state in which a battery is connected to a first connection terminal of a connector and in which a rear cover is connected to a second connection terminal according to various embodiments of the present disclosure.

Referring to FIG. 13, the multi-direction connection connector 50 according to various embodiments of the present disclosure may be produced to have one fixed end and a plurality of free ends. The multi-direction connection connector 50 may alternately include a first connection terminal 510 and a second connection terminal 520.

A configuration of the first connection terminal 510 has been already described and thus a detailed description thereof will be omitted.

In the first connection terminal 510, a connection portion may be formed to be embedded in a concave shape portion, similar to the second connection terminal 520.

According to various embodiments of the present disclosure, in the second connection terminal 520, an end portion area extended from the fixed end may be included in a recess depressed at a second surface of the terminal body. The second connection terminal 520 may include a bending portion or may not include a bending portion, and may be disposed at a depressed recess of a second surface.

According to various embodiments of the present disclosure, when the battery 62 is housed in a battery slot, respective connection terminals 620 of the battery may be connected to the respective first connection terminals 510 and maintain the connected state. The battery connection terminal 620 has a flat terminal shape, but because the first connection terminal 510 is in an elastically supported state, the respective battery connection terminals 620 and the respective first connection terminals 510 may maintain a close contact state.

When the rear cover 70 is coupled to the main body rear case 600, the second connection terminal 520 and a connection terminal 760 in the rear cover 70 may be connected and maintain the connected state. The rear cover 70 may be, for example, a battery cover or an accessory cover. The connection terminal 760 disposed at an inner surface of the rear cover 70 has a protruded shape, but the second connection terminal 520 has elasticity and has a concave shape that may close contact with the connection terminal, and thus the respective connection terminals 760 and the respective second connection terminals 520 may maintain a close contact state.

In the present disclosure, a dual direction connection connector of multi-direction connection connectors is described. When a multi-direction connector is a triple direction connection connector, the multi-direction connector may include a third connection terminal at a third surface other than first and second surfaces provided in the terminal body. The third connection terminal may have a disposition different from that of the first and second connection terminals and have a similar shape. Further, according to various embodiments of the present disclosure, a connection connector may be added.

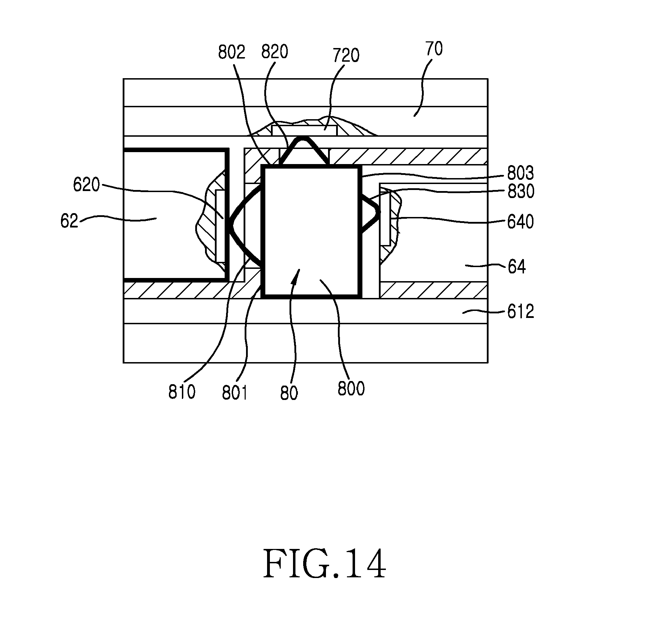

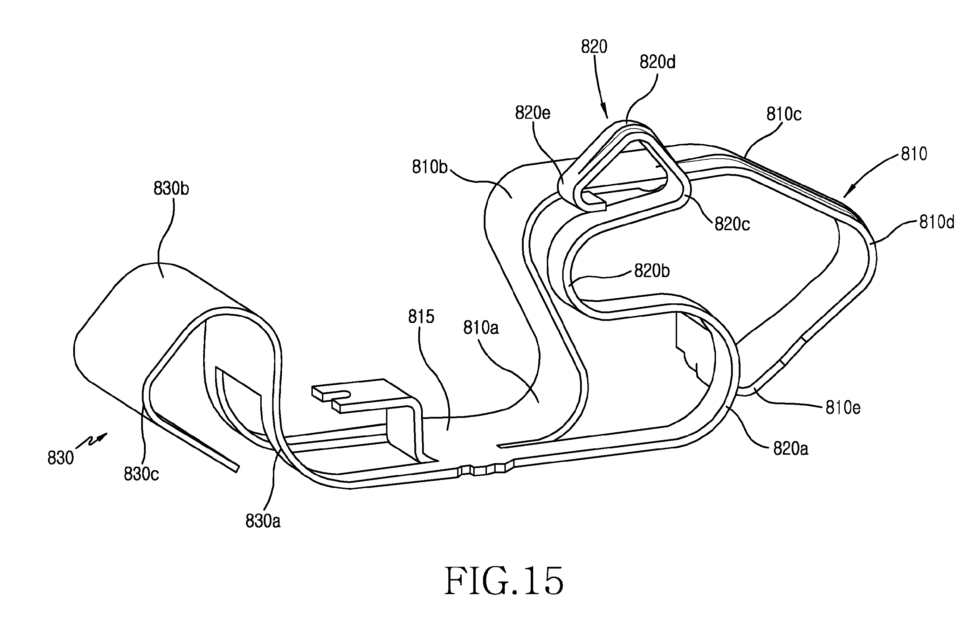

Hereinafter, a configuration of a triple-direction connection connector according to various embodiments of the present disclosure will be described with reference to FIGS. 14 and 15.

FIG. 14 is a cross-sectional view illustrating a rear case in which a triple direction connector is mounted according to various embodiments of the present disclosure.

Referring to FIGS 14, a connector 80 according to various embodiments of the present disclosure may include a terminal body 800 and first, second, and third connection terminals 810, 820, and 830 housed and supported in the terminal body 800. The terminal body 800 is an injection material of an approximately rectangular parallelepiped shape and may be implemented with a support that supports the first, second, and third connection terminals 810, 820, and 830. The terminal body 800 may have a first surface 801, a second surface 802, and a third surface 803. The first surface 801 and the third surface 803 may be a vertical surface, and the second surface 802 may be a horizontal surface. The respective first, second, and third connection terminals 810, 820, and 830 may be disposed in one or in plural at the first, second, and third surfaces 801, 802, and 803 of the terminal body.

When the connector 80 is mounted in the mobile device, the first surface 801 may be a surface facing with a first battery terminal 620 of a first battery 62, the second surface 802 may be a surface facing with an inner surface of a first battery cover 70 or an accessory cover using for detaching a battery, and the third surface 803 may be a surface facing with an accessory terminal or a second battery terminal 640 of a second battery 64.

According to various embodiments of the present disclosure, the respective first connection terminals 810 may have a shape protruded from an opening or a slot formed at the first surface 801 of the terminal body. Further, the respective first connection terminals 810 may be disposed to have elasticity with an equal interval at the first surface 801. The respective first connection terminals 810 may elastically move at respective openings or slots provided at the first surface 801. Further, the respective first connection terminals 810 may be disposed to protrude from the first surface 801 in a state in which an end portion area thereof is bent.

According to various embodiments of the present disclosure, the respective second connection terminals 820 may have a shape protruded from an opening or a slot formed at the second surface 802 of the terminal body. Further, the respective second connection terminals 820 may be disposed to have elasticity with an equal interval at the second surface 802. The respective second connection terminals 820 may elastically move at respective openings provided at the second surface 802. Further, the respective second connection terminals 820 may be disposed to protrude from the second surface 802 in a state in which an end portion area thereof is bent.

According to various embodiments of the present disclosure, the respective third connection terminals 830 may have a shape protruded from openings or slots formed at the third surface 803 of the terminal body. Further, the respective third connection terminals 830 may be disposed to have elasticity with an equal interval at the third surface 803. The respective third connection terminals 830 may elastically move at respective openings provided at the third surface 803. Further, the respective third connection terminals 830 may be disposed to protrude from the third surface 803 in a state in which an end portion area thereof is bent. Further, the respective first, second, and third connection terminals 810, 820, and 830 may be alternately disposed with an equal interval.

According to various embodiments of the present disclosure, the respective first connection terminals 810 may be disposed at respective openings formed at the first surface 801, the respective second connection terminals 820 may be disposed at respective openings formed at the second surface 802, and the respective third connection terminals 830 may be disposed at respective openings formed at the third surface 803.

The respective first, second, and third connection terminals 810, 820, and 830 may be spatially and independently disposed in the terminal body 800 and may be disposed not to receive interference to independently move. "The independent" means that the first, second, and third connection terminals 810, 820, and 830 are disposed to move in different directions and do not receive interference when moving.

A configuration of first, second, and third connection terminals according to various embodiments of the present disclosure will be described with reference to FIG. 15. FIG. 15 illustrates only a first connection terminal 810, a second connection terminal 820, and a third connection terminal 830.

FIG. 15 is a perspective view illustrating a triple direction connection terminal mounted in a connector according to various embodiments of the present disclosure.

Referring to FIG. 15, a connector 80 according to various embodiments of the present disclosure may adjust the number of first, second, and third connection terminals 810, 820, and 830 mounted in a terminal body according to a performance of a mobile device. For example, at respective first, second, and third surfaces 801, 802, and 803 of the terminal body, one first, second, and third connection terminals 810, 820, and 830, respectively, may be formed, and at the first, second, and third surfaces 801, 802, and 803 of the terminal body, two first, second, and third connection terminals 810, 820, and 830, respectively, may be alternately formed. Further, at the first surface 801, one first connection terminal may be formed, at the second surface 802, one or a plurality of connection terminals may be formed, and at the third surface 803, one or a plurality of connection terminals may be formed.

In order to fix the respective first, second, and third connection terminals 810, 820, and 830 to the terminal body, the respective first, second, and third connection terminals 810, 820, and 830 may share fixed end 815. The first, second, and third connection terminals 810, 820, and 830 may be electrically, functionally, and mechanically connected by the fixed end 815. A connection terminal provided in the connector 80 according to various embodiments of the present disclosure may include one fixed end 815 and a plurality of free ends (first, second, and third connection terminals).

According to various embodiments of the present disclosure, the connector 80 may be produced to have one fixed end 815 and three or more free ends. The three free ends each may include one or a plurality of first, second, and third connection terminals 810, 820, and 830.

According to various embodiments of the present disclosure, the first connection terminal 810 may be produced by bending of at least three times at the fixed end 815. The first connection terminal 810 may be produced by a bending work of one time or two times, but when producing by a bending work of at least three times, a characteristic of an elastic force may be further improved. The first connection terminal 810 is produced by a bending work of at least three times and may be produced in a first direction in which the first surface 801 of the terminal body 800 is formed. The first connection terminal 810 has a first bending portion 810a formed by primarily bending at the fixed end 815, a second bending portion 810b formed by secondarily bending, and a third bending portion 810c formed by thirdly bending and may be thus disposed in a first direction advancing toward the first surface 801 of the terminal body 800. Finally, the first connection terminal 810 has a fourth bending portion 810d formed by a bending work. The fourth bending portion 810d may be a portion connecting to a terminal of a battery to be described later. A bending portion 810e in an end portion of the first connection terminal 810 may be provided or may not be provided.

According to various embodiments of the present disclosure, the second connection terminal 820 may be produced by bending of at least three times at the fixed end 815. The second connection terminal 820 may be produced by a bending work of one time or two times, but when producing by a bending work of at least three times, an elastic force may further increase. The second connection terminal 820 is produced by a bending work of at least three times and may be produced in a second direction in which the second surface 802 of the terminal body is formed. The second connection terminal 820 has a first bending portion 820a formed by primarily bending at the fixed end 815, a second bending portion 820b formed by secondarily bending, and a third bending portion 820c formed by thirdly bending, and may be disposed in a second direction advancing toward the second surface 802 of the terminal body. Finally, the second connection terminal 820 may have a fourth bending portion 820d formed by a bending work. The fourth bending portion 820d may be a portion connecting to a rear cover, for example, a battery cover and an accessary cover. A bending portion 820e in an end portion of the second connection terminal 820 may be provided or may not be provided.

According to various embodiments of the present disclosure, the third connection terminal 830 may be produced by bending of at least three times at the fixed end 815. The third connection terminal 830 may be produced by a bending work of one time or two times, but when producing with a bending work of at least three times, an elastic force may further increase. The third connection terminal 830 is produced by a bending work of at least three times and may be produced in a third direction in which the third surface 803 of the terminal body is formed. The third connection terminal 830 has a first bending portion 830a formed by primarily bending at the fixed end 815, a second bending portion 830b formed by secondarily bending, and a third bending portion 830c formed by thirdly bending and may be thus disposed in a third direction advancing toward a third surface 803 of the terminal body. The third bending portion 830c may be a portion connecting to a rear cover, for example, a battery cover and an accessary cover.

According to various embodiments of the present disclosure, the respective first, second, and third connection terminals 810, 820, and 830 have bending portions of at least three locations and are disposed in different directions, and advancing directions of the respective first, second, and third connection terminals 810, 820, and 830 may be different according to a disposition of another connection terminal. The first connection terminal 810 may be disposed in a first direction in which a first surface is formed, the second connection terminal 820 may be disposed in a second direction in which a second surface is formed, and the third connection terminal 830 may be disposed in a third direction in which a third surface is formed. The first connection terminal 810 and the second connection terminal 820 may be relatively disposed in a vertical direction. The second connection terminal 820 and the third connection terminal 830 may be relatively disposed in a vertical direction. The first connection terminal 810 and the third connection terminal 830 may be disposed in an opposite direction.

When the first, second, and third connection terminals 810, 820, and 830 are in a connected state, the first, second, and third connection terminals 810, 820, and 830 share only fixed end 815, and the free ends thereof are independently disposed to operate in different directions, and thus mutual moving interference thereof may be prevented and the first, second, and third connection terminals 810, 820, and 830 may independently operate.

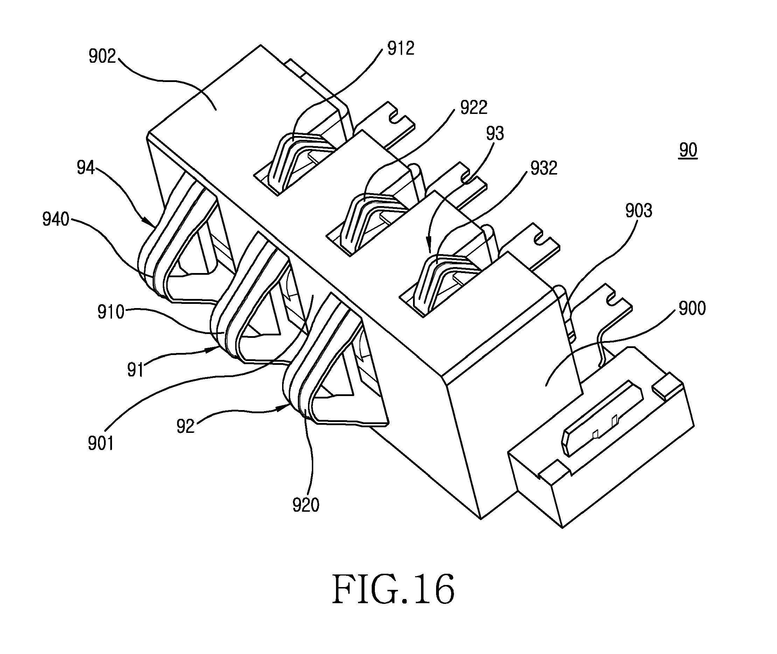

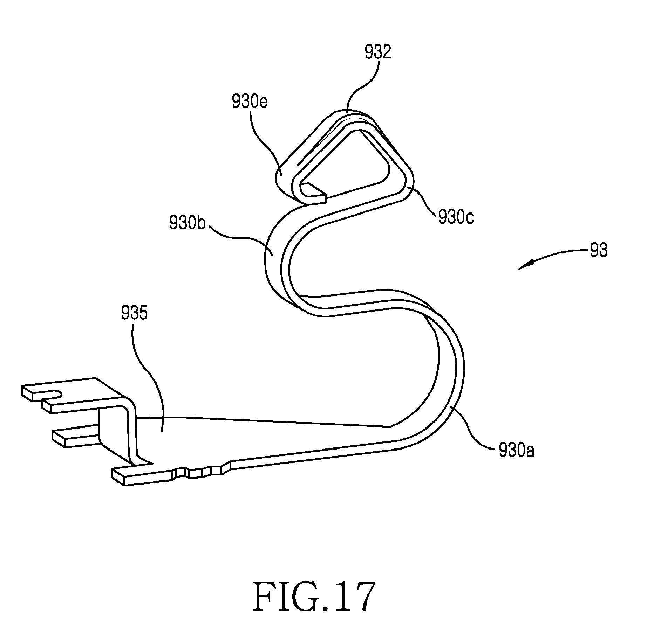

Hereinafter, a configuration of a connector according to various embodiments of the present disclosure will be described with reference to FIGS. 16 and 17. In the connector, a plurality of connection pieces disposed at the terminal body may be formed with a combination of a unidirectional connection terminal and a dual direction connection terminal. According to various embodiments of the present disclosure, a plurality of connection pieces may be formed with a combination of a unidirectional connection terminal, a dual direction connection terminal, and a triple direction connection terminal. According to a performance of a mobile device, in a terminal body, a plurality of connection pieces may be formed with a combination of a unidirectional connection terminal and a dual direction connection terminal, a combination of a unidirectional connection terminal and a triple direction connection terminal, and a combination of a dual direction connection terminal and a triple direction connection terminal.

FIG. 16 is a perspective view illustrating a connector according to various embodiments of the present disclosure.

FIG. 17 is a perspective view illustrating a connection terminal provided in a connector according to various embodiments of the present disclosure.

Referring to FIGS. 16 and 17, a connector 90 according to various embodiments of the present disclosure may include a terminal body 900 and first, second, and third connection pieces 91, 92, and 93 housed and supported in the terminal body 900. The terminal body 900 is an injection material of an approximately rectangular parallelepiped shape and may be implemented with a support that supports the first, second, and third connection pieces 91, 92, and 93. The terminal body 900 may have a first surface 901, a second surface 902, and a third surface 903. The first surface 901 and the third surface 903 may be a vertical surface, and the second surface 902 may be a horizontal surface. The respective first and second, and third connection pieces 91, 92, and 93 may be disposed with an equal interval in a lengthwise direction of the terminal body. Reference numeral 94 indicates a fourth connection piece.

When the connector 90 is mounted in the mobile device, the first surface 901 may be a surface facing with a battery terminal of a first battery, and the second surface 902 may be a surface facing with an inner surface of a battery cover or an accessory cover using for detaching a battery. Therefore, connection terminals disposed at the first surface may each be a terminal connecting to a battery terminal, and connection terminals disposed at the second surface may each be a terminal connecting to a terminal provided in a battery cover or an accessory cover.

According to various embodiments of the present disclosure, the first and second connection pieces 91 and 92 among connection pieces provided in the connector 90 have the same configuration and have first connection terminals 910 and 920 and second connection terminals 912 and 922, respectively. The third connection piece 93 has a single connection terminal 930, and a fourth connection piece 94 has a single connection terminal 940. That is, the first and second connection pieces 91 and 92 have first connection terminals 910 and 920 and second connection terminals 912 and 922 at the first surface 901 and the second surface 902, respectively, the third connection piece 93 has a connection terminal only at the second surface 902, and the fourth connection piece 94 has a connection terminal only at the first surface 901. That is, the connector 90 may include third and fourth connection pieces 93 and 94 having a unidirectional connection terminal and first and second connection pieces 91 and 92 having a dual direction connection terminal.

Further, the first and second connection pieces 91 and 92 may be produced to share the fixed end. Further, the third and fourth connection pieces 93 and 94 may be produced to share the fixed end with the first and second connection pieces 91 and 92 and may be independently produced to not share the fixed end.

The respective first and second connection pieces 91 and 92 have the same configuration as that of the terminal of FIGS. 6 and 7 and thus a detailed configuration description thereof will be omitted. The first and second connection pieces 91 and 92 have first connection terminals 910 and 920 and second connection terminals 912 and 922, respectively and may be formed to independently move.

The third connection piece 93 may have a single connection terminal 932 advancing toward the second surface 902, and the fourth connection piece 94 may have a connection terminal 940 advancing toward the first surface 901. The connection terminal 932 of the third connection piece 93 may have the same configuration as that of the second connection terminal of FIG. 6, and the connection terminal 940 of the fourth connection piece 94 may have the same configuration as that of the first connection terminal of FIG. 6.

A connection terminal of the third connection piece may be a terminal connected to a battery cover or an accessory cover. A connection terminal of the fourth connection piece may be a terminal connected to a battery terminal.

The respective first and second connection terminals 910, 920, and 930; 912, 922, and 932 may be spatially and independently disposed at the terminal body 900 and may be disposed not to receive interference to independently move. "The independent" means that the first, second, and third connection terminals are disposed to move in different directions and do not receive interference when moving.

A configuration of a third connection piece according to various embodiments of the present disclosure will be described with reference to FIG. 17.

In order to fix the third connection piece 93 to the terminal body, the third connection piece 93 may share fixed end 935. The third connection piece 93 may be electrically, functionally, and mechanically connected by the fixed end 935.

According to various embodiments of the present disclosure, the third connection piece 93 may be produced by bending of at least three times at the fixed end 935. The third connection piece 93 may be produced by a bending work of one time or two times, but when producing by a bending work of at least three times, a characteristic of an elastic force may be further improved. The third connection piece 93 may be produced by a bending work of at least three times and may be produced in a second direction in which the second surface 902 of the terminal body is formed. The third connection piece 93 may have a first bending portion 930a formed by primarily bending at fixed end 935, a second bending portion 930b formed by secondarily bending, and a third bending portion 930c formed by thirdly bending. Finally, the third connection piece 93 has a fourth bending portion 932 by a bending work. The fourth bending portion 932 may be a portion connecting to a terminal of a battery cover or an accessory cover. A bending portion 930e in an end portion of the third connection terminal 93 may be provided or may not be provided. Further, the connection terminal 932 of the third connection piece 93 may be a terminal connecting to a second connecting portion.

Resultantly, the connector 90 according to various embodiments of the present disclosure may be formed with a combination of one or a plurality of connection pieces having a unidirectional connection terminal and one or a plurality of connection pieces having a dual direction connection terminal and may thus actively correspond to a performance of various mobile devices.

According to various embodiments of the present disclosure, a connector includes: a terminal body; one or a plurality of first connection terminals disposed at a first surface of the terminal body; and one or a plurality of second connection terminals disposed at a second surface of the terminal body, wherein the first connection terminal and the second connection terminal are electrically connected, and at least one of the first connection terminal and the second connection terminal moves independently from the other one.

According to various embodiments of the present disclosure, the first connection terminal and the second connection terminal may be located to operate in different directions.

According to various embodiments of the present disclosure, the respective first connection terminal and second connection terminal may be alternately disposed at the terminal body.

According to various embodiments of the present disclosure, the first connection terminal may be disposed toward a battery slot, and the second connection terminal may be disposed toward a rear cover.

According to various embodiments of the present disclosure, the first connection terminal may include at least one of a NFC antenna terminal, a near field wireless charge antenna terminal, and a ground terminal.

According to various embodiments of the present disclosure, the second connection terminal may include at least one of an NFC antenna terminal, a near field wireless charge antenna terminal, a ground terminal, and an accessory cover identification pin terminal.

According to various embodiments of the present disclosure, the connection terminal provided in the connector may have one fixed end; and a plurality of free ends extended from the fixed end.

According to various embodiments of the present disclosure, at the fixed end, the first and second connection terminals may be electrically and mechanically connected and shared in an integral form.

According to various embodiments of the present disclosure, at the respective free end, the first and second connection terminals each may have a shape alternately bent at least one time.

According to various embodiments of the present disclosure, the respective free ends may have a shape bent at least three times.

According to various embodiments of the present disclosure, any one of the first connection terminal or the second connection terminal may have an end portion protruded in a shape bent at the first surface and the second surface.

According to various embodiments of the present disclosure, any one of the first connection terminal or the second connection terminal may have a connecting surface located in the coplanar state as the first surface and the second surface or in a state parallel to the first surface and the second surface.

According to various embodiments of the present disclosure, any one of the first connection terminal or the second connection terminal may be disposed to be housed in a groove recessed at the first surface and the second surface.

According to various embodiments of the present disclosure, the respective first connection terminal and second connection terminal may advance in a vertical direction.

According to various embodiments of the present disclosure, an electronic device includes: a main body; a rear cover detachably provided in the main body; a battery detachably provided in the main body; and a connection connector including a terminal body, a plurality of first connection terminals disposed in a first direction to connect to the battery at a first surface of the terminal body, and a plurality of second connection terminals disposed in a second direction to connect to the rear surface cover at a second surface of the terminal body and that move independently from the respective first connection terminal.

According to various embodiments of the present disclosure, any one of the first connection terminal or the second connection terminal may be disposed in a protrusion type by bending at the first surface and the second surface, and a third connection terminal provided in the battery/rear cover contacting with the disposed connection terminal may be provided in a flat pad shape.

According to various embodiments of the present disclosure, any one of the first connection terminal or the second connection terminal may be formed in a connecting surface locating in a parallel state/the coplanar state as the first surface and the second surface, and a third connection terminal provided in the battery/rear cover connecting with the connecting surface may be provided in a protrusion type connection terminal.

According to various embodiments of the present disclosure, any one of the first connection terminal or the second connection terminal may be disposed to be housed at a groove recessed at a first surface of a terminal body and a second surface of the terminal body, and a third connection terminal provided in the battery/rear surface cover contacting with the disposed connection terminal may be provided in a protrusion type connection terminal.

According to various embodiments of the present disclosure, the second connection terminal may include one or two or more of an NFC antenna terminal, a near field wireless charge antenna terminal, a ground terminal, and an accessory cover identification pin terminal.

According to various embodiments of the present disclosure, the terminal provided in the connector may have fixed end and a plurality of free ends, the fixed end may be a sharing portion in which the first and second connection terminals are electrically and mechanically connected in an integral form, and the respective free ends may include portions having a shape in which the first and second connection terminals are alternately bent at least three times.

According to various embodiments of the present disclosure, a connector includes: a terminal body; one or a plurality of first connection terminals disposed at a first surface of the terminal body; one or a plurality of second connection terminals disposed at a second surface of the terminal body; and one or a plurality of third connection terminals disposed at a third surface of the terminal body, wherein the respective first, second, and third connection terminals are electrically connected, and the respective first, second, and third connection terminals independently move.

According to various embodiments of the present disclosure, the first connection terminal may be connected to a first battery terminal, the second connection terminal may be connected to a battery cover/accessory cover terminal, and the third connection terminal may be connected to a second battery terminal or an accessory terminal.

According to various embodiments of the present disclosure, a connector includes: a terminal body; one or a plurality of first connection pieces having a unidirectional connection terminal disposed at the terminal body; and one or a plurality of second connection pieces having a dual direction connection terminal disposed at the terminal body.

According to various embodiments of the present disclosure, the unidirectional and dual direction connection terminals may be electrically connected, and the unidirectional and dual direction connection terminals may independently move.

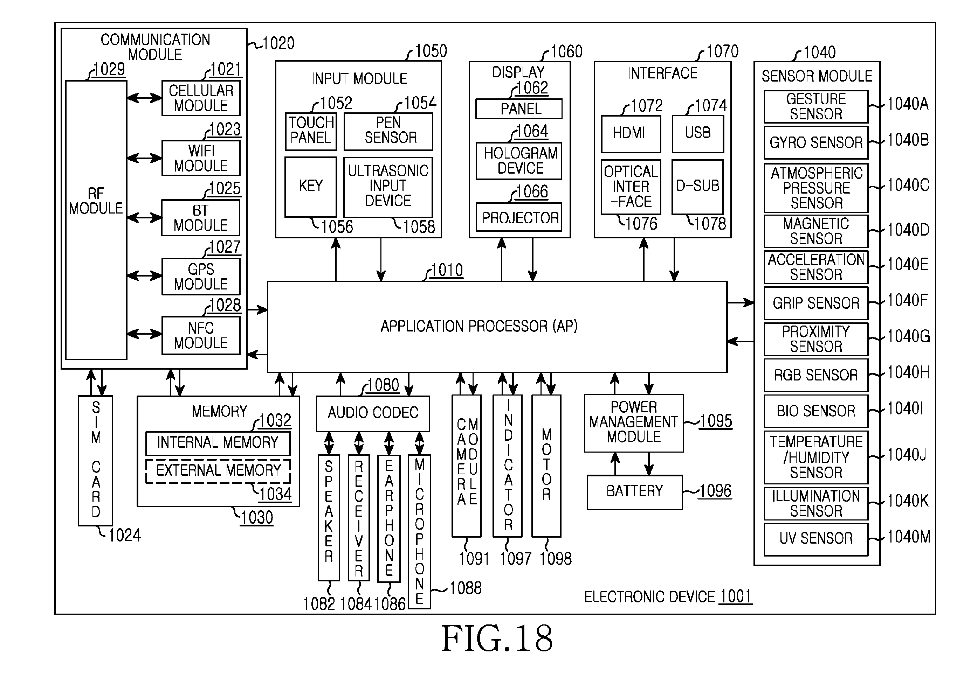

FIG. 18 illustrates a block diagram of an electronic device according to various embodiments of the present disclosure. The electronic device may form, for example, the entire or a portion of the electronic device A101 of FIG. 1.

Referring to FIG. 18, an electronic device 1001 may include at least one Application Processor (AP) 1010, a communication module 1020, a Subscriber Identification Module (SIM) card 1024, a memory 1030, a sensor module 1040, an input device 1050, a display 1060, an interface 1070, an audio module 1080, a camera module 1091, a power management module 1095, a battery 1096, an indicator 1097, and a motor 1098, but is not limited thereto.

The AP 1010 may drive an operation system or an application program to control a plurality of hardware or software components connected to the AP 1010 and perform various data processing and operations including multimedia data. The AP 1010 may be implemented with, for example, a System on Chip (SoC). According to an embodiment of the present disclosure, the AP 1010 may further include a Graphic Processing Unit (GPU) (not shown).

The communication module 1020 (e.g., the communication interface A160) may perform data transmitting and reception in communication between other electronic devices (e.g., the electronic device A104 or the server A106) connected to the electronic device 1001 (e.g., the electronic device A101) through a network. According to an embodiment of the present disclosure, the communication module 1020 may include a cellular module 1021, a WiFi module 1023, a BT module 1025, a GPS module 1027, an NFC module 1028, and a Radio Frequency (RF) module 1029.

The cellular module 1021 may provide audio dedicated communication, audiovisual communication, a text message service, or an Internet service through a communication network (e.g., LTE, LTE-A, CDMA, WCDMA, UMTS, WiBro or GSM). Further, the cellular module 1021 may perform identification and authentication of an electronic device within a communication network using, for example, a subscriber identity module (e.g., the SIM card 1024). According to an embodiment of the present disclosure, the cellular module 1021 may perform at least a partial function of functions in which the AP 1010 may provide. For example, the cellular module 1021 may perform at least a portion of a multimedia control function.

According to an embodiment of the present disclosure, the cellular module 1021 may include a Communication Processor (CP). Further, the cellular module 1021 may be implemented with, for example, an SoC. Referring to FIG. 18, elements such as the cellular module 1021 (e.g., a communication processor), the memory 1030, or the power management module 1095 are an element separate from the AP 1010, but according to an embodiment of the present disclosure, the AP 1010 may include at least a portion (e.g., the cellular module 1021) of the foregoing elements.

According to an embodiment of the present disclosure, the AP 1010 or the cellular module 1021 (e.g., a communication processor) may load and process an instruction or data received from a nonvolatile memory connected thereto or at least one of other elements in a volatile memory. Further, the AP 1010 or the cellular module 1021 may store data received from at least one of other elements or generated by at least one of other elements at a non-volatile memory.

The WiFi module 1023, the BT module 1025, the GPS module 1027, or the NFC module 1028 each may include, for example, a processor for processing data transmitted and received through a corresponding module. FIG. 18 illustrates that the cellular module 1021, the WiFi module 1023, the BT module 1025, the GPS module 1027, or the NFC module 1028 each are a separate block, but according to an embodiment of the present disclosure, at least a portion (e.g., two or more) of the cellular module 1021, the WiFi module 1023, the BT module 1025, the GPS module 1027, or the NFC module 1028 may be included within an integrated chip IC or an IC package. For example, at least a portion (e.g., a communication processor corresponding to the cellular module 1021 and a WiFi processor corresponding to the WiFi module 1023) of processors corresponding to each of the cellular module 1021, the WiFi module 1023, the BT module 1025, the GPS module 1027, or the NFC module 1028 may be implemented with a SoC.

The RF module 1029 may perform transmission and reception of data, for example, transmission and reception of a RF signal. The RF module 1029 may include, for example, a transceiver, a Power Amp Module (PAM), a frequency filter, or a Low Noise Amplifier (LNA) that is not shown. Further, the RF module 1029 may further include a component, for example, a conductor or a conductive wire that transmits and receives electromagnetic waves on free space in wireless communication. The cellular module 1021, the WiFi module 1023, the BT module 1025, the GPS module 1027, and the NFC module 1028 share an RF module 1029, but according to an embodiment of the present disclosure. At least one of the cellular module 1021, the WiFi module 1023, the BT module 1025, the GPS module 1027, or the NFC module 1028 may perform transmission and reception of an RF signal through a separate RF module.

The SIM card 1024 may be a card including a subscriber identification module and may be inserted into a slot formed at a specific location of the electronic device. The SIM card 1024 may include intrinsic identification information (e.g., Integrated Circuit Card Identifier (ICCID)) or subscriber information (e.g., International Mobile Subscriber Identity (IMSI)).

The memory 1030 (e.g., the memory A130) may include an internal memory 1032 or an external memory 1034. The internal memory 1032 may include at least one of, for example, a volatile memory (e.g., a Dynamic Random Access Memory (DRAM), a Static RAM (SRAM), a Synchronous Dynamic RAM (SDRAM)) or a non-volatile memory (e.g., an One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a Not And (NAND) flash memory, and a Not Or (NOR) flash memory).

According to an embodiment of the present disclosure, the internal memory 1032 may be a Solid State Drive (SSD). The external memory 1034 may further include a flash drive, for example, a Compact Flash (CF), Secure Digital (SD), Micro-SD, Mini-SD, extreme Digital (xD), or a memory stick. The external memory 1034 may be functionally connected to the electronic device 1001 through various interfaces. According to an embodiment of the present disclosure, the electronic device 1001 may further include a storage device (or storage medium) such as a hard drive.

The sensor module 1040 may measure a physical quantity or may detect an operation state of an electronic device 1001 and convert measured or detected information to an electrical signal. The sensor module 1040 may include at least one of, for example, a gesture sensor 1040A, a gyro sensor 1040B, an atmospheric pressure sensor 1040C, a magnetic sensor 1040D, an acceleration sensor 1040E, a grip sensor 1040F, a proximity sensor 1040G, a color sensor 1040H (Red, Green, and Blue (RGB) sensor), a bio sensor 1040I, a temperature/humidity sensor 1040J, an illumination sensor 1040K, or an Ultra Violet (UV) sensor 1040M. Additionally or alternatively, the sensor module 1040 may include, for example, an E-nose sensor (not shown), an electromyography sensor (EMG sensor) (not shown), an electroencephalogram sensor (EEG sensor) (not shown), an electrocardiogram sensor (ECG sensor) (not shown), an Infrared (IR) sensor (not shown), an iris sensor (not shown), or a fingerprint sensor (not shown). The sensor module 1040 may further include a control circuit that controls at least one sensor belonging to the inside thereof.

The input device 1050 may include a touch panel 1052, a (digital) pen sensor 1054, a key 1056, or an ultrasonic input device 1058. The touch panel 1052 may recognize a touch input with at least one of, for example, a capacitive, resistive, infrared ray, or ultrasonic wave method. Further, the touch panel 1052 may further include a control circuit. When the touch panel 1052 is a capacitive type touch panel, the touch panel 1052 may perform a physical contact or proximity recognition. The touch panel 1052 may further include a tactile layer. In this case, the touch panel 1052 may provide a haptic reaction to a user.

The (digital) pen sensor 1054 may be implemented using the same method as and a method similar to, for example, reception of a touch input of the user or a separate recognition sheet. The key 1056 may include, for example, a physical button, an optical key, or a keypad. The ultrasonic wave input device 1058 may determine data by detecting a sound wave with a microphone (e.g., a microphone 1088) in the electronic device 1001 through an input means that generates an ultrasonic wave signal and may perform wireless recognition. According to an embodiment of the present disclosure, the electronic device 1001 may receive a user input from an external device (e.g., a computer or a server) connected to the communication module 1020 using the communication module 1020.

The display 1060 (e.g., the display A150) may include a panel 1062, a hologram device 1064, or a projector 1066. The panel 1062 may be, for example, a Liquid Crystal Display (LCD) or an Active-Matrix Organic Light-Emitting Diode (AMOLED). The panel 1062 may be implemented with, for example, a flexible, transparent, or wearable method. The panel 1062 and the touch panel 1052 may be formed in a module. The hologram device 1064 may show a stereoscopic image in the air using interference of light. The projector 1066 may project light on a screen to display an image. The screen may be located, for example, at the inside or the outside of the electronic device 1001. According to an embodiment of the present disclosure, the display 1060 may further include a control circuit for controlling the panel 1062, the hologram device 1064, or the projector 1066.

The interface 1070 may include, for example, an HDMI 1072, a USB 1074, an optical interface 1076, or D-subminiature (D-sub) 1078. The interface 1070 may be included in, for example, the communication interface A160 of FIG. 1. Additionally or alternatively, the interface 1070 may include, for example, a Mobile High-definition Link (MHL) interface, an SD/Multi-Media Card (MMC) interface, or an Infrared Data Association (IrDA) specification interface.

The audio module 1080 may interactively convert a sound and an electronic signal. At least some elements of the audio module 1080 may be included, for example, in the input and output interface A140 of FIG. 1. The audio module 1080 may process sound information input or output through, for example, a speaker 1082, a receiver 1084, an earphone 1086, or a microphone 1088.

The camera module 1091 may photograph a still picture and a moving picture and include at least one image sensor (e.g., a front surface lens or a rear surface lens), a lens (not shown), an Image Signal Processor (ISP) (not shown), or a flash (not shown) (e.g., a Light Emitting diode (LED) or a xenon lamp) according to an embodiment of the present disclosure.

The power management module 1095 may manage power of the electronic device 1001. Although not shown, the power management module 1095 may include, for example, a Power Management Integrated Circuit (PMIC), a charger IC, a battery or a fuel gauge.

The PMIC may be mounted within, for example, an IC or an SoC semiconductor. A charging method may be classified into a wired method and a wireless method. The charge IC may charge a battery and prevent an overvoltage or an overcurrent from being injected from a charger. According to an embodiment of the present disclosure, the charge IC may include a charge IC for at least one of a wired charge method and a wireless charge method. The wireless charge method may include, for example, a magnetic resonance method, a magnetic induction method, or an electromagnetic wave method and may add an additional circuit, for example, a circuit such as a coil loop, a resonant circuit, and a rectifier for wireless charge.

The battery gauge may measure, for example, a residual quantity of the battery 1096, a voltage, a current, or a temperature while charging. The battery 1096 may store or generate electricity and supply power to the electronic device 1001 using stored or generated electricity. The battery 1096 may include, for example, a rechargeable battery or a solar battery.

The indicator 1097 may display a specific state, for example, a booting state, a message state, or a charge state of the electronic device 1001 or a portion (e.g., the AP 1010) thereof. The motor 1098 may convert an electrical signal to a mechanical vibration. Although not shown, the electronic device 1001 may include a processing device (e.g., GPU) for supporting a mobile TV. The processing device for supporting a mobile TV may process media data according to a specification such as Digital Multimedia Broadcasting (DMB), Digital Video Broadcasting (DVB), or media flow.

The foregoing elements of an electronic device according to various embodiments of the present disclosure may each be formed with at least one component, and a name of a corresponding element may be changed according to a kind of the electronic device. The electronic device according to various embodiments of the present disclosure may include at least one of the foregoing elements and may omit some elements or may further include additional other elements. Further, when some of elements of the electronic device according to various embodiments of the present disclosure are coupled to form an entity, the entity may equally perform a function of corresponding elements before coupling.

According to various embodiments of the present disclosure, at least a portion of a device according to the present disclosure may be implemented with an instruction stored at computer-readable storage media in a form of, for example, a programming module. When the instruction is executed by at least one processor, the at least one processor may perform a function corresponding to the instruction. The computer readable storage media may be, for example, a memory. At least a portion of the programming module may be implemented (e.g., executed) by, for example, the processor. At least a portion of the programming module may include, for example, a module, a program, a routine, sets of instructions, or a process for performing at least one function.

The computer-readable storage media may include magnetic media such as a hard disk, a floppy disk, and a magnetic tape, optical media such as a Compact Disc Read Only memory (CD-ROM) and a DVD, magneto-optical media such as a floptical disk, and a hardware device, specially formed to store and perform a program instruction (e.g., a programming module), such as a ROM, a RAM, or a flash memory. Further, a program instruction may include a high-level language code that may be executed by a computer using an interpreter as well as a machine language code generated by a compiler. In order to perform operation of the present disclosure, the foregoing hardware device may be formed to operate as at least one software module, and vice versa.

A module or a programming module according to the present disclosure may include at least one of the foregoing elements, may omit some elements, or may further include additional other elements. Operations performed by a module, a programming module, or another element according to the present disclosure may be executed with a sequential, parallel, repeated, or heuristic method. Further, some operations may be executed in different orders, may be omitted, or may add other operations.

According to various exemplary embodiments of the present invention, by reducing the number of contact clips mounted in a main Printed Circuit Board (PCB) by enabling a connection terminal (connecting surface/connection groove) of different directions connected by a circuit to a battery connector mounted in a mobile device to independently drive, a material cost may be reduced, a mounting space may be secured, and a connection quality may be improved.

According to various exemplary embodiments of the present invention, even if any one of a first connection piece and a second connection piece is connected, a connector in which the remaining connection piece maintains an original shape may be provided.

According to various exemplary embodiments of the present invention, by reducing the number of contact clips mounted in a main PCB by contacting with an accessory cover in a battery connector on the main PCB, a connector that enables reduction of a material cost and securement of a mounting space may be provided.

While the present invention has been shown and described with reference to various exemplary embodiments thereof, it will be understood by those skilled in the art that various changes in form and details may be made therein without departing from the scope of the present invention, as defined by the appended claims.

## Claims

1. A connector comprising:
a terminal body;
at least one first connection terminal disposed at a first surface of the terminal body; and
at least one second connection terminal disposed at a second surface of the terminal body,
wherein the at least one first connection terminal and the at least one second connection terminal are electrically connected, and
wherein the at least one first connection terminal moves independently of the at least one second connection terminal.

2. The connector of claim 1,
wherein the at least one first connection terminal and the at least one second connection terminal are configured to operate in different directions, and
wherein the at least one first connection terminal and the at least one second connection terminal are alternately disposed at the terminal body.

3. The connector of claim 2,
wherein the at least one first connection terminal is disposed toward a battery slot, and
wherein the at least one second connection terminal is disposed toward a rear cover.

4. The connector of claim 3,
wherein the at least one first connection terminal comprises at least one of a Near Field Communication, NFC, antenna terminal, a near field wireless charge antenna terminal, and a ground terminal, and
wherein the at least one second connection terminal comprises at least one of an NFC antenna terminal, a near field wireless charge antenna terminal, a ground terminal, and an accessory cover identification pin terminal.

5. The connector of claim 2, 3 or 4, wherein the at least one first connection terminal and the at least one second connection terminal provided in the connector comprises:
one fixed end; and
a plurality of free ends extended from the one fixed end.

6. The connector of claim 5, wherein at the one fixed end, the at least one first connection terminal and the at least one second connection terminal are electrically and mechanically connected and shared in an integral form.

7. The connector of claim 6,
wherein for each of the plurality of free ends, the at least one first connection terminal and the at least one second connection terminal have a shape alternately bent at least one time, and
wherein each of the plurality of free ends have a shape alternately bent at least three times.

8. The connector of any preceding claim, wherein any one of the at least one first connection terminal and the at least one second connection terminal at least one of:
has an end portion protruded in a shape bent at the first surface and the second surface;
has a connecting surface located in a coplanar state as the first surface and the second surface or in a state parallel to the first surface and the second surface; and
is disposed to be housed in a groove recessed at the first surface and the second surface.

9. The connector of any preceding claim, further comprising:
at least one third connection terminal disposed at a third surface of the terminal body,
wherein the at least one first connection terminal, the at least one second connection terminal, and the at least one third connection terminal are electrically connected respectively, and
wherein the respective at least one first connection terminal, at least one second connection terminal, and at least one third connection terminal independently move.

10. The connector of claim 9, wherein the at least one first connection terminal is connected to a first battery terminal, the at least one second connection terminal is connected to one of a battery cover and accessory cover terminal, and the at least one third connection terminal is connected to one of a second battery terminal and an accessory terminal.

11. The connector of claim 9 or 10, wherein the at least one first connection terminal, the at least one second connection terminal, and the at least one third connection terminal are configured with an equal interval in a lengthwise direction of the terminal body.

12. The connector of any preceding claim,
wherein the at least one first connection terminal comprises at least one first connection piece having a unidirectional connection terminal disposed at the terminal body; and
wherein the at least one second connection terminal comprises at least one second connection piece having a dual direction connection terminal disposed at the terminal body.

13. The connector of claim 12,
wherein the unidirectional connection terminal and the dual direction connection terminal are electrically connected, and
wherein the unidirectional connection terminal and the dual direction connection terminal independently move.

14. An electronic device comprising:
a main body;
a rear cover detachably provided in the main body;
a battery compartment for receiving a detachable battery in the main body; and
a connection connector comprising a terminal body, at least one first connection terminal disposed in a first direction for connecting to the battery at a first surface of the terminal body, and at least one second connection terminal disposed in a second direction for connecting to the rear cover at a second surface of the terminal body and that moves independently from the at least one first connection terminal.

15. The electronic device of claim 14,
wherein any one of the at least one first connection terminal and the at least one second connection terminal is disposed in a protrusion type by bending at the first surface and the second surface, and
wherein a third connection terminal provided in one of the battery and the rear cover contacting with the at least one first connection terminal is provided in a flat pad shape.

16. The electronic device of claim 14 or 15,
wherein any one of the at least one first connection terminal and the at least one second connection terminal is formed in a connecting surface locating in one of a parallel state and a coplanar state as the first surface and the second surface, and
wherein a third connection terminal provided in one of the battery and rear cover connecting with the connecting surface is provided in a protrusion type connection terminal.

17. The electronic device of claim 14, 15 or 16,
wherein any one of the at least one first connection terminal and the at least one second connection terminal is disposed to be housed at a groove recessed at a first surface of a terminal body and a second surface of the terminal body, and
wherein a third connection terminal provided in one of the battery and the rear cover contacting with the at least one first connection terminal is provided in a protrusion type connection terminal.

18. The electronic device of any of claims 14 to 17, wherein the at least one second connection terminal comprises at least one of a Near Field Communication, NFC, antenna terminal, a near field wireless charge antenna terminal, a ground terminal, and an accessory cover identification pin terminal.

19. The electronic device of any of claims 14 to 18,
wherein the terminal provided in the connector has a fixed end and a plurality of free ends, the fixed end is a sharing portion in which the at least one first connection terminal and the at least one second connection terminal are electrically and mechanically connected in an integral form, and
wherein each of the plurality of free ends comprise portions having a shape in which the at least one first connection terminal and the at least one second connection terminal are alternately bent at least three times.
